# EUROPEAN PATENT APPLICATION

(11) **EP 2 840 858 A1**
(43) Date of publication of application: **25.02.2015**
(21) Application number: 14176497.7
(22) Date of filing: 10.07.2014
(51) Int. Cl.: H04W 84/12, H04N 21/41, H04N 21/414, H04N 21/422, H04N 21/436, H04N 21/4363, H04L 29/08

(54) **Methods for content sharing utilising a compatibility notification to a display forwarding function and associated devices**

(30) Priority: 23.08.2013 FR 1358288
(71) Applicant: Thomson Licensing, 92130 Issy-les-Moulineaux (FR)
(72) Inventor: Jeanne, Ludovic, 35576 Cesson-Sévigné (FR); Steyer, Jean-Marie, 35576 Cesson-Sévigné (FR); Quinquis, Cyril, 35576 Cesson-Sévigné (FR)
(74) Representative: Huchet, Anne

(57) **Abstract**

Method in an audiovisual programme receiver-decoder client device (1), the method using a function for providing notification of capability specific to a standardised display forwarding function to inform a remote item of equipment of the capability of the device to transmit an item of content. The method comprises a step of insertion (S1) of information elements into a link layer of a communication interface of the device, a step of reception (S2) of an item of information from a second remote device (7) connected to the interface by a direct point-to-point link (6), a step of configuration (S3) of the control of the reception and/or reproduction of an item of audiovisual content received by the device using the item of information representative of a remote command and a step of insertion of data (S4) adapted to the insertion of a coded, received item of audiovisual content into frames inserted into a data stream transmitted at the MAC link layer of the interface (3) to the remote device (7) connected via the intermediary of the link (6).

## Description

### 1. Field of the invention.

The invention relates to the field of local networks and more specifically to content sharing utilising a function for providing notification of compatibility to a display forwarding (screen mirroring) function.

### 2. Prior Art.

Many items of electronic equipment are suitable for incorporating in local computer networks (home networks or otherwise) and participating, with other connected equipments, in the implementation of functions made available for the user.

Portable electronic devices, with their reduced dimensions, now enable significant mobility. The user can thus take them everywhere. The evolution of technologies specific to screens is such that images are now of very good quality on screens of reduced dimensions such as those available on audiovisual reproduction devices such as portable players, tablets, laptop computers and smartphones, for example.

The latest technologies used in making screens also enable access to large reproduction surfaces for fixed (non-portable) reproduction devices, such as television sets or monitors, for example.

According to usage and where he is, the user is therefore led to prefer to view an item of content on a mobile device, comprising a display of reduced dimensions, or on a fixed device, comprising a display of large dimensions, better adapted to the visual comfort of the user, during the reproduction (the display) of an item of content.

Thus, a smartphone or a tablet appears well adapted to viewing an item of content when on the move, in a car or in public transport, and viewing on a large screen will very often be preferred for viewing a film at home, for example.

Recently, a feature has enabled the user to control, in a simple way, the reproduction of an item of audiovisual content available on an item of portable equipment by a fixed device and/or a device of larger dimensions by using a wireless connection. This operation will be called "display forwarding" or "reproduction forwarding" in the remainder of the present document. Thus, an item of content captured (saved) using a portable device can easily and quickly be displayed by a reproduction device of larger (display) dimension when the two devices are close and both compatible with the connection technology used.

Thus the standardised WiFi Display technology, also known under the name of Miracast, enables a device of smartphone type to display its local content (that is to say saved in the internal memory) on a remote reproduction device, by means of a wireless connection. The WiFi Display and Miracast technologies both being built from the WiFi Direct technology.

Other proprietary solutions also exist and provide the user with the same features, such as, for example Air Play from the firm *Apple,* WiDi from the firm *Intel* and *mirrorop.*

In the paragraphs which follow, the "WiFi Display" function is defined as a function for display forwarding by wireless peer-to-peer connection based on WiFi Direct and in a similar manner to Bluetooth technology enabling the broadcast of compressed audiovisual content to a remote item of equipment. "WiFi Display standard" will be used to denote the set of protocol elements defined in WiFi Direct and those specified in "WiFi Display" enabling the implementation of the functions of display forwarding as supported by the standard named Miracast. "WiFi Direct" is a standard enabling two items of equipment to be directly connected to each other by WiFi link, without using an access point. The display forwarding function according to WiFi Display requires that both devices concerned are compatible.

WiFi Direct which serves as a medium for WiFi Display is itself defined by the "WiFi Alliance" as a certification and compatibility mark for the direct peer-to-peer WiFi connection function as described by the manufacturers' alliance "WiFi Alliance".

When a user has an item of portable equipment compatible with WiFi Display technology, he benefits from the advantages afforded by these user-friendly display technologies if he has a compatible item of equipment equipped with a comfortable screen.

In parallel to this, many devices implement content sharing functions and are equipped to be connected to a local network. These devices, such as computers, data storage units and display devices, support content sharing functions such as those described in the UPnP (Universal Plug and Play)/DLNA (Digital Living Network Alliance) standard, for example.

The implementation of these functions requires, however, for the manufacturer to pay for a licence, which represents an additional cost with respect to the production cost of the product.

### 3. Summary of the invention.

According to a first aspect, the invention makes it possible to improve the state of the art by proposing a method for transferring an audiovisual programme utilising a function for providing notification of compatibility to a display forwarding function such as, for example, WiFi Display (also known commercially as Miracast) with a view to sharing one or more items of content.

The concept of the invention cleverly makes use of the fact that a display forwarding standard, such as Miracast, for example, uses a standardised notification of the display capabilities of an item of equipment. The idea is to use these notification capabilities to publish, not display capabilities, but capabilities for publishing (making available) audiovisual or other content, so that a second item of equipment receiving the notification information can request the transmission thereto of one or more items of content. The request being made by the transmission of an item of information representative of a command.

For this purpose, the method for transferring an audiovisual programme according to the invention is applied in a device for receiving audiovisual programmes. The receiver client comprises a first interface and a second interface. The first interface is adapted to receive items of audiovisual content (at least one) and the second interface is adapted to wireless direct point-to-point connection with a remote reproduction device compatible in reception with a display forwarding function.

According to an embodiment of the invention, the transfer method comprises:
- a reception of an item of information representative of a remote command, from said remote device, aiming to configure a reception parameter of said receiver device;
- a configuration of the control of the reception of an audiovisual programme received over said first interface using said item of information representative of a remote command.

More specifically, in some embodiments, the method comprises:
- a insertion of information elements (called "IEs") into the link layer of the second interface, the information elements being adapted to transmit, at the MAC network link layer, items of information representative of a capability to transmit over the second interface a coded item of audiovisual content received from the first interface, prior to an operation for decoding the audio and/or video components of the coded item of audiovisual content,
- a reception of an item of information from a remote device connected to the second interface by a direct point-to-point link, the direct link using the MAC link layer for the transmission of the item of information, the item of information being representative of a remote command aiming to modify a reception, configuration or reproduction parameter of the receiver device,
- a configuration of the control of the reception and/or reproduction of an item of audiovisual content received over the first interface using the item of information representative of a remote command,
- a insertion of data adapted to the insertion of the coded item of audiovisual content into frames inserted into a data stream transmitted at the MAC link layer to the remote device connected to the second interface.

Advantageously, an interface adapted to the reception of an item of content for the implementation of a display forwarding from a remote device connected by means of a direct peer-to-peer wireless connection can thus be used for the transmission of a received item of audiovisual content to a remote device.

According to an embodiment of the invention, the display forwarding function and the item of information representative of a remote command are compatible with the WiFi Display standard based on the WiFi Direct direct point-to-point communication standard, or a revision of this standard.

According to an embodiment of the invention, the second interface is an interface for communication with a wireless local network, for example a bidirectional wireless communication interface compatible with a wireless communication standard such as wireless communication standard IEEE802.11-2012 or one of its revisions.

According to a particular embodiment of the invention, said received audiovisual programmes are available from a plurality of transmission channels of a transmission network and said configuration comprises a selection of a transmission channel according to said received item of information.According to a particular characteristic, said transfer method comprises a transmission of an audiovisual programme to said remote device, said transmission taking into account said selection.

According to a particular characteristic, said transfer method comprises a reproduction of an audiovisual programme on said receiver device, said reproduction taking into account said selection.

According to a particular characteristic, said transfer method comprises a broadcast of an item of audiovisual content previously received by said receiver device, said broadcast being implemented according to said representative item of information.

While not explicitly described, the present embodiments related to a transfert method may be employed in any combination or sub-combination. For example, some embodiments may involve a display forwarding function and an item of information representative of a remote command compatible with the WiFi Display standard based on the WiFi Direct direct point-to-point communication standard, or a revision of this standard, with received audiovisual programmes available from a plurality of transmission channels of a transmission network, with said configuration comprising a selection of a transmission channel according to said received item of information, and a transmission of an audiovisual programme to said remote device, said transmission taking into account said selection.

According to another aspect, the invention relates to a method for reproducing an audiovisual programme on a device for reproducing audiovisual programmes comprising an interface compatible with a function for display forwarding from a remote device. According to a particular embodiment, the reproduction method comprises:
- a definition of an item of information representative of a remote command aiming to configure a reception parameter of said remote device;
- a transmission of said representative item of information to said remote device from said interface.

While not explicitely described, the reproduction method further comprises others steps, in order to cooperate with the transfert method already described, in any of its embodiments.

The invention further relates to a device for receiving audiovisual programmes.

The receiver device comprises a first interface and a second interface. The first interface is adapted for the reception of items of audiovisual content and the second interface is compatible in reception with a function for display forwarding to a remote device.

According to a particular embodiment, said receiver device comprises:
- a reception module, adapted to a reception of an item of information representative of a remote command, from said remote device, aiming to configure a reception parameter of said receiver device;
- a control module adapted to a control of the reception of an audiovisual programme received over said first interface using said item of information representative of a remote command.

According to a particular embodiment of the invention, the second interface can be configured for the wireless direct point-to-point connection with the remote device.

According to a particular embodiment of the invention, the receiver device comprises:
- an insertion module, adapted to an insertion of information elements into the link layer of the second interface, the information elements being adapted to transmit, at the MAC network link layer, items of information representative of a capability to transmit over the second interface a coded item of audiovisual content received from the first interface, prior to an operation for decoding the audio and/or video components of the coded item of audiovisual content,
- a reception module, adapted to a reception of an item of information from the remote device connected to the second interface by a direct point-to-point link, the direct link using the MAC link layer for the transmission of the item of information, the item of information being representative of a remote command aiming to modify a reception or reproduction parameter of the receiver device,
- a control module adapted to a control of the reception and reproduction of an item of audiovisual content received over the first interface using the item of information representative of a remote command,
- a data insertion module, adapted to the insertion of the coded item of audiovisual content into frames successively inserted into a data stream transmitted at the MAC link layer to the remote device connected to the second interface.

According to an embodiment of the invention, the receiver client device comprises a device for reproducing audiovisual content and the display forwarding function is compatible with the WiFi Display function based on the WiFi Direct direct point-to-point communication standard, or a revision of this standard.

According to an embodiment of the invention, the second interface is a bidirectional wireless communication interface compatible with wireless communication standard IEEE802.11-2012 or one of its revisions.

According to an embodiment of the invention, the received audiovisual programmes are available from a plurality of transmission channels and the selection of a transmission channel is controlled by the received item of information representative of a remote command.

According to a particular characteristic, the receiver device belongs to the group comprising:
- a set top box,
- a television set,
- a computer.

According to a particular characteristic, said representative item of information belongs to the group comprising:
- a programme number to be selected in reception,
- a transmission channel number to be selected,
- an incrementation of a current channel number;
- a decrementation of a current channel number.
While not explicitely described, the receiver device may further comprises others modules, configured for implementing the transfert method already described, in any of its embodiments.

According to yet another aspect, the invention relates to a device for reproducing an audiovisual programme comprising an interface compatible with a function for display forwarding from a remote device.
According to a particular embodiment of the invention, said device comprises:
- a definition module, adapted for a definition of an item of information representative of a remote command aiming to configure a reception parameter of said remote device;
- a transmission module, adapted for a transmission of said representative item of information to said remote device from said interface.

According to a particular characteristic, the reproduction device belongs to the group comprising:
- a tablet,
- a telephone equipped with a graphical screen,
- a smartphone,
- a computer.

While not explicitely described, the reproduction device may further comprise others modules, configured for implementing the reproduction method already described, in any of its embodiments.

### 4. List of figures.

The invention will be better understood, and other specific features and advantages will emerge upon reading the following description, the description making reference to the annexed drawings wherein:
- **Figure 1** shows an audiovisual content receiver-decoder client device connected to a transmission network by a first interface and to a remote item of equipment by a wireless communication interface.
- **Figure 2** shows details of the wireless communication interface module of the client receiver-decoder device visible in figure 1.
- **Figure 3** is a functional diagram showing a method for transferring audiovisual programmes according to the invention.
- **Figure 4** is a functional diagram showing a method for reproducing audiovisual programmes according to the invention.
- **Figure 5** shows details of the remote reproduction device visible in figure 1.

### 5. Detailed description of embodiments of the invention.

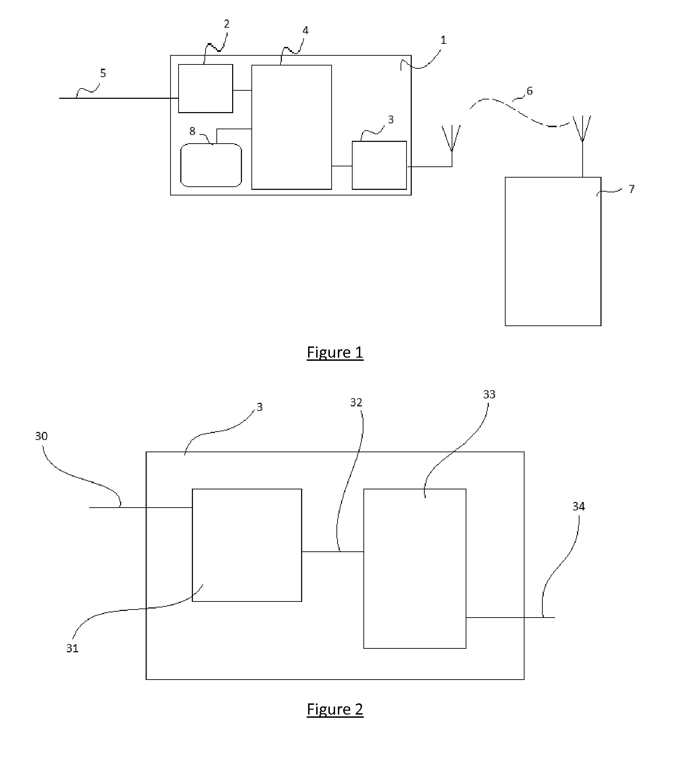

In **figures 1, 2** and **5****,** the modules shown are functional units that may or may not correspond to physically distinguishable units. For example, these modules or some of them are grouped together in a single component, or constituted of functions of the same software. On the contrary, according to other embodiments, some modules are composed of separate physical entities.

**Figure 1** shows an audiovisual programme receiver-decoder device 1, connected to a transmission network 5 by a first interface 2 and to a remote device 7 via the wireless communication interfaces 3, 370 according to a non-restrictive embodiment of the invention.

In some embodiments, the device for receiving audiovisual programmes can, without itself reproducing it, transmit the audiovisual programme received by the first interface to a remote device. In other embodiments, the receiver device can transmit and in addition reproduce the received audiovisual programme. In such embodiments, as shown in figure 1, the receiver device comprises a module for reproduction of audiovisual programmes. According to the embodiments, the device can transmit the programme without previously decoding it, as in the embodiment shown in figure 1, or instead by previously decoding it.

In the embodiment shown in figure 1, the receiver device 1, also commonly called "STB" or "set-top box", is a receiver-decoder such as is well known to those skilled in the art in the field of transmission, reception and coding/decoding of items of audiovisual content. The receiver-decoder device comprises a data reception interface 2, connected to a data transmission network 5. According to the embodiment of the invention shown, the transmission network 5 is an IP (Internet Protocol) network enabling the reception of data coding one or more items of audiovisual content such as pieces of music, films, video clips, or television programmes, for example. According to variants, the network 5 is a network for broadcasting digital terrestrial television or for broadcasting digital television by cable or satellite. According to other variants, the network 5 is a data transmission network of type 3G or 4G or one of their evolutions, further adapted to telecommunications for mobile telephones, in addition to data exchanges.

The client receiver-decoder 1 can therefore receive one or more programmes or items of audiovisual content, from a source not shown, connected to the distribution (or broadcast) network 5. The receiver-decoder 1 is adapted to the selection of a reception channel, from among a plurality of channels. According to the embodiment of the invention shown, the client receiver-decoder 1 receives audiovisual programmes during IPTV multicast transmission sessions compatible with the broadcast of digital television by IP.

The client receiver-decoder 1 incorporates a control unit module 4 of SOC (system on chip) type dedicated to the functions of reception, decoding and reproduction of items of audiovisual content. The control unit 4 incorporates the set of modules adapted to the implementation of the functions traditionally used in an audiovisual programme receiver-decoder device, namely a demultiplexer module, buffer memories, a decoding unit, one or more video output interfaces, one or more audio output interfaces, one or more microcontrollers associated with random access memory (working memory) and non-volatile memory (storage memory) modules, and all the circuits traditionally present in a receiver-decoder architecture (power supply circuit, reset circuit, clock circuits, etc.). The control unit 4 further comprises a video transcoder making it possible to convert data coding an item of audiovisual content into other data coding the same item of audiovisual content according to another format. This transcoder makes it possible, for example, if necessary to convert an item of audiovisual content received in an MPEG2 compression format into an item of audiovisual content in H.264 format, or vice versa.

The receiver-decoder 1 comprises, in addition to its interface 2 for connection to the content broadcast network 5, a wireless communication interface 3 connected to an antenna. According to the embodiment of the invention, interface 3 is an interface for communication with a wireless local network, for example a WiFi wireless communication interface adapted to the transmission and reception of data according to wireless communication standard IEEE802.11 (for example IEEE802.11 -2012 or one of its revisions). The control unit 4 of the receiver-decoder 1, associated with WiFi wireless communication interface 3, enables the implementation of display forwarding functions compatible with the Miracast standard. The client receiver-decoder device 1 comprises a device for reproducing 8 audiovisual content and an interface adapted to the connection of an external reproduction device (a monitor or a television set), via the intermediary of a link of HDMI (high definition multimedia interface) type, for example. Due to its compatibility with the Miracast display forwarding standard, the client receiver-decoder 1 is configurable to received data frames comprising a coded item of audiovisual content via the intermediary of its WiFi wireless communication interface 3, from a remote mobile device, so that the item of audiovisual content received from this remote device is reproduced by the reproduction device 8 of the receiver-decoder 1 or by an external reproduction device connected to the receiver-decoder device 1. This is possible, notably because, due to its compatibility with the Miracast standard, the receiver-decoder 1 transmits information frames able to indicate, to any device connected to interface 3 by a point-to-point wireless link 6 (for example the remote device 7, via its interface 370), its display capabilities with a view to a display forwarded for the benefit of the user of a compatible mobile device.

But quite cleverly, and according to an advantageous mode of implementation of the invention, the client receiver-decoder device 1 transmits data 100 in information frames which, received and interpreted by a remote reproduction device 7 connected to wireless interface 3 via the intermediary of a point-to-point link 6, will enable it (the remote device) to be notified of the availability of an item of content being received and reproduced at the receiver-decoder device 1. Thus, and according to the invention, the remote reproduction device 7 (for example in the particular embodiment shown a terminal designed for a mobile use and with a reproduction screen 10 of reduced dimensions) can request the transmission thereto of the item of audiovisual content being received and reproduced for display purposes, in addition to its ability to use the Miracast-compatible receiver-decoder 1 for the implementation of a forwarded display, notably with a view to a better comfort of use. Advantageously, the wireless link 6 implementing the transmission of data frames according to the display forwarding standard is used "in the opposite direction", thus making it possible to receive and reproduce on the remote mobile device 7 the item of audiovisual content received and reproduced by the client receiver-decoder 1. Thus, a user who watches an audiovisual programme in reception using the client receiver-decoder 1 can move away from this receiver and take the connected mobile device 7 with him, even if it then means only experiencing a lower display quality. Such a possibility advantageously enables the user to continue viewing an item of audiovisual content being received by the receiver-decoder 1 while going to answer the telephone in a neighbouring room, for example.

In the embodiment shown, the remote mobile device 7 comprises all the modules and circuits used in the implementation of data reception and transmission according to the WiFi Display (Miracast) and WiFi Direct WiFi communication standards, and in the reception, encoding, decoding and reproduction of data and in any other processing operation related to these functions. According to the particular embodiment shown, the mobile remote device 7 is for example a mobile telephone equipped with a screen, such as a telephone of "smartphone" type or a tablet or a laptop computer whose architectural details are not detailed here, not being useful to the understanding of the invention.

According to the particular embodiment shown, the audiovisual programme receiver-decoder 1 comprises a first interface 2 and a second interface 3, the first interface 2 being configured for the reception of items of audiovisual content from a broadcast network 5; the second interface 3 is for its part configured for wireless direct point-to-point connection with a remote device (such as the mobile device 7, of smartphone or tablet type, for example) and compatible in transmission with a display forwarding function. In the embodiment shown, the receiver-decoder device 1 further comprises:
- an insertion module 31 (see also the description of figure 2), comprised in interface 30, adapted for the insertion of information elements into the link layer of the second interface 3, the information elements 100 being adapted to transmit, at the MAC network link layer, items of information representative of a capability to transmit via the second interface 3 a coded item of audiovisual content, previously received from the first interface 2, prior to an operation for decoding the audio and/or video components of the coded item of audiovisual content,
- a reception module 31, sub-assembly of the wireless interface module 3, for the reception of an item of information 200 from the remote mobile device connected to the second interface 3 by a direct point-to-point link 6, the direct link 6 using the MAC link layer for the transmission of the item of information 200, the item of information 200 being representative of a remote command aiming to modify a reception or reproduction parameter of the receiver-decoder device 1,

- a control module 4 adapted to the control of the reception and reproduction of an item of audiovisual content received over said first interface (2) using the item of information representative of a remote command (200),
- a data insertion module 4, 31, adapted to the insertion of the coded, received item of audiovisual content into frames successively inserted into a data stream transmitted at the MAC link layer of the second interface 3 to the mobile remote device 7.

Still according to the embodiment, the receiver-decoder device 1 comprises an audiovisual programme reproduction device 8 and the display forwarding function is compatible with the WiFi Display (Miracast) function, which is based on the WiFi Direct direct point-to-point communication standard. In addition, the second interface 3 is a bidirectional wireless communication interface, for example an interface compatible with wireless communication standard IEEE802.11-2012 or one of its revisions.

The audiovisual programmes received via the broadcast network 5 are available from a plurality of transmission channels of the transmission network 5, for example multicast broadcast IP addresses, enabling the broadcast of items of audiovisual content using the IGMP broadcast protocol, and the selection of a transmission channel is controlled by an item of information received by the receiver-decoder 1, from the mobile remote device 7, the item of information being representative of a remote command. This item of information representative of a remote command is for example a programme number, a channel number, a code whose interpretation requests the reception of a channel whose index is immediately less/greater in a list of channels (P-, P+), a request for image freezing and buffering (STOP or pause with deferred resumption of reproduction), or a request for resumption of reproduction (PLAY command).

Thus, the item of information 200 representative of a remote command, received from the mobile remote device 7 via the wireless communication interface 3, is transmitted to the control unit 4 which interprets it and configures one or more elements of the receiver-decoder 1, according to the command received. Thus, and if the command codes an order of tuning or connection to a channel whose index is immediately greater in the list of broadcast channels available on the network 5, the control unit 4 of the receiver-decoder 1 configures or reconfigures the interface 2 for connection to the network 5 to receive data transmitted on the channel concerned.

According to the embodiment of the invention shown, the command received by the receiver-decoder device 1 and transmitted by the mobile remote device 7 does not modify the reception and the reproduction in progress of the audiovisual programme reproduced by the reproduction module 8 of the receiver-decoder 1 or by an external reproduction device connected to the receiver-decoder 1, but only the reception and the transmission of the audiovisual programme transmitted to the remote mobile device 7 and reproduced by the latter. According to a variant embodiment, the command received by the receiver-decoder device 1, from the mobile remote device 7, reconfigures the reception and reproduction functions linked to the reproduction in progress on the receiver-decoder 1 and the remote device 7 therefore then intervenes in the reception of the decoder-receiver, in addition to serving as a device for reproducing an item of audiovisual content received from the receiver-decoder 1. In other words, according to the embodiment of the invention shown, the remote device makes it possible to receive an audiovisual programme and to reproduce it on the remote mobile device 7, via the intermediary of a WiFi Display/Miracast-compatible link, independently of the reception and reproduction of an item of content in progress by the receiver-decoder 1, the receiver-decoder being able to receive simultaneously a plurality of items of audiovisual content, while according to a variant embodiment, the remote mobile reproduction device 7 selects the item of audiovisual content received and in the process of reproduction by the receiver-decoder 1.

According to another variant of the invention, the interpretation of the command received leads to the broadcast of an item of audiovisual content previously received and stored in a data storage unit internal to the receiver-decoder or connected thereto via an interface, with a view to its reproduction, as exists in interoperability standard functions such as, for example, DLNA/UPnP. The item of audiovisual content can be of audio or video type, possibly static (image, photo).

If applicable, the control unit 4 transcodes the item of audiovisual content in order that the frames transmitted by the WiFi interface 3 can be processed by the mobile remote device 7. For example, an image in native .JPEG format will be transcoded into a data stream in H.264 format directly compatible with the native capabilities of an item of equipment of Miracast-compatible smartphone type.

Figure 2 shows architectural details of the wireless communication interface 3 of the audiovisual programme receiver-decoder 1 according to a particular and non-restrictive embodiment of the invention.

Interface 3 comprises a control unit 31 and a transfer and processing block 33 specific to the link layer of the interface. This block 33 manages the transmissions and reception of data from and to the control unit block 31. These two main elements being connected by a bidirectional internal bus 32.

The wireless communication interface 3 is connected to the control unit 4 of the receiver-decoder 1 via the intermediary of a bus 30 and to an antenna external or internal to the receiver-decoder 1 via the intermediary of a link 34.

The control unit 31 carries out the insertion of the information elements 100 (IEs) into the link layer of interface 3 and to do this uses an internal buffer memory. The information elements 100 are written to the buffer memory of the control unit 31 by the control unit 4, via the bus 30, before insertion. The control unit 4 thus writes information elements to the specific information fields described in the Miracast standard and enabling any device connected to interface 3 of the receiver-decoder 1, by a wireless direct point-to-point link 6, to know that it can, according to the principle of the invention, use the information elements normally used for the notification of display capabilities according to the Miracast display forwarding standard, to find out the capabilities for sharing audiovisual content from the client receiver-decoder 1.

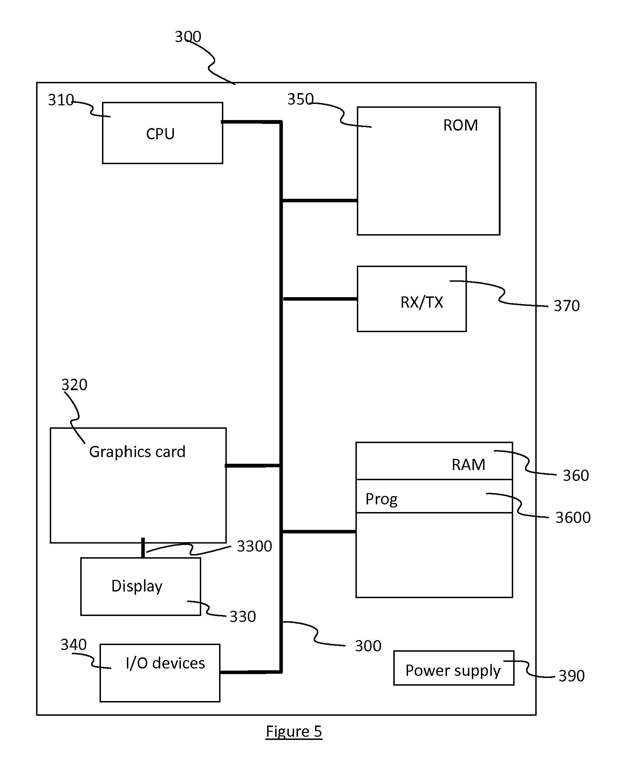

**Figure 5** shows architectural details of the remote reproduction device 7 according to a particular and non-restrictive embodiment of the invention.

The remote device 7 notably comprises the following modules, connected to each other by an address and data bus 3000 which also transports a clock signal:
- a microprocessor 310 (or CPU);
- a graphics card 320;
- one or more I/O (Input/Output) devices 340 such as for example a keyboard, a mouse, a webcam, a microphone, a loudspeaker, etc.;
- a non-volatile memory of ROM (Read Only Memory) type 350;
- a random access memory (RAM) 360;
- a communication interface 370 configured for the transmission (TX) and the reception (RX) of data, for example via a wireless link 6 (notably of WIFI® or Bluetooth type), compatible with a function for display forwarding from a remote device, notably from the receiver device 7;
- a power supply 390;
- a display device 330 of display screen type directly connected to the graphics card 320 by a dedicated bus 3300.

Each of the memories mentioned can comprise at least one "register", that is to say a memory zone of low capacity (some binary data) or a memory zone of large capacity (making it possible to store a whole programme or all or part of the data representative of data calculated or to be displayed).

When switched on, the microprocessor 310 loads and executes the instructions of the program contained in a register 3600 of the RAM 360, and notably the algorithms implementing the reproduction method specific to the invention and described hereafter.

According to a variant, the remote device 7 comprises several microprocessors.

According to another variant, the power supply 390 is external to the remote device 7.

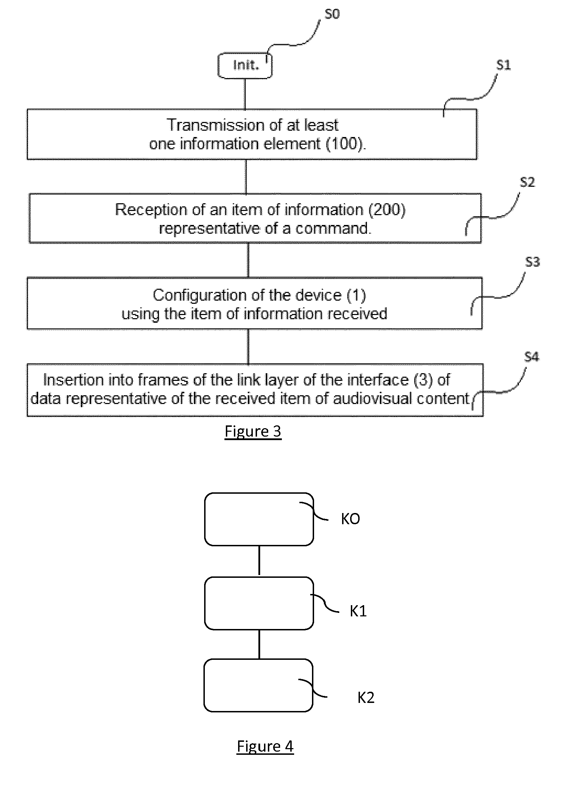

In the embodiment shown in figure 3, the microprocessor 310 can in particular be configured to:
- define an item of information 200 representative of a remote command aiming to configure a reception parameter of the receiver device 1;
- transmit a defined representative item of information 200 to the receiver device 1 from the wireless interface 370 compatible with a display forwarding function and for the reception of an audiovisual programme via the wireless interface 370 compatible with a display forwarding function;
- reproduce an audiovisual programme received via the wireless interface 370 compatible with a display forwarding function.

**Figure 3** is a functional diagram which shows the method for transferring an item of audiovisual content from the client receiver-decoder 1 connected to the broadcast network 5 to the mobile remote device 7, of smartphone, tablet or computer type, for example, according to a particular and non-restrictive embodiment of the invention.

The method makes it possible to use the function of the Miracast (WiFi Display) standard to operate a device acting traditionally as a "MiracastSink" (according to the prior art) as a "Miracast Display", according to the concept of the invention.

The method for transferring audiovisual programmes, implemented in the audiovisual programme receiver-decoder client device 1 comprises:
- an initialisation **S0**, which corresponds to a nominal operating state of the receiver-decoder 1 after it has been switched on and placed in nominal operation, such as, for example, in reception of a programme on a predefined channel of the broadcast network 5 connected to the first interface 2.
- an insertion **S1** of information elements IEs 100 into the link layer of the second interface 3 of the receiver-decoder 1, the information elements IEs 100 being adapted to transmit, at the MAC network link layer, items of information representative of a capability to transmit over the second interface 3 a coded item of audiovisual content received from the first interface 2, prior to an operation for decoding by the receiver-decoder 1 the audio and/or video components of the coded item of audiovisual content,
- a reception **S2,** by the receiver-decoder 1 and via the wireless interface 3, an item of information 200 from the remote device 7 connected to the second interface 3 by a direct point-to-point link 6, the direct link 6 using the MAC link layer for the transmission of the item of information 200, the item of information 200 being representative of a remote command aiming to modify a reception, configuration or reproduction parameter of the receiver-decoder device 1,
- a configuration **S3** of the control of the reception and/or reproduction of an item of audiovisual content received over the first interface 2 using the item of information 200 representative of a remote command, This step can notably be a request for changing the channel (or programme) received, decoded and reproduced by the receiver-decoder 1, client of the broadcast network 5.
- an insertion **S4** of data representative of the coded item of audiovisual content into frames inserted into a data stream transmitted at the MAC link layer of the second interface 3 to the mobile remote device 7 connected to the second interface 3 of the receiver-decoder 1.

Thus, interface 3, initially adapted to the reception of an item of content for the implementation of a display forwarding from the remote device 7 (according to the prior art) connected by means of a direct peer-to-peer wireless connection 6 is used for the transmission of a item of audiovisual content received by the receiver-decoder 1 to the remote device 7. The WiFi Display/Miracast link is advantageously and cleverly used for a transmission "in the opposite direction" according to the concept of the invention.

According to an embodiment of the invention, the display forwarding function and the item of information 200 representative of a remote command are compatible with the WiFi Display standard based on the WiFi Direct direct point-to-point communication standard, or a revision of this standard.

According to an embodiment of the invention, the second interface 3 is a bidirectional wireless communication interface compatible with a wireless communication standard, for example standard IEEE802.11, in its IEEE802.11-2012 version or one of its revisions.

According to an embodiment of the invention, the audiovisual programmes received by the receiver-decoder 1 are available from a plurality of transmission channels of the network 5 and the selection of a transmission channel is controlled by the received item of information 200 representative of a remote command.

Overall, and according to the embodiment of the invention, the receiver-decoder 1 cleverly transmits information elements IEs 100 as defined according to the WiFi Display (Miracast) standard and which aim to inform a connected remote device of capabilities of the device which transmits these information elements IE. The insertion of information elements 100 into the link layer corresponds to sending items of information representative of the capability to transmit a coded data stream from the receiver-decoder 1 to the remote mobile device 7, for example a smartphone, normally used as a "Miracast source" in the implementation of a Miracast display forwarding function. In other words, the remote device 7, which serves as a data stream transmitter in the implementation of a Miracast function, serves here, cleverly, as a receiver ("sink") receiving a data stream carrying an item of audiovisual content. The mobile remote device 7 in this case operates as an "additional" reproduction device for the reproduction of an item of audiovisual content received by the client receiver-decoder device 1. The stream being initially transmitted by the broadcast network 5. According to a variant embodiment, the stream can be transmitted from a file stored on a storage memory internal or external to the receiver-decoder 1, such as a hard disk, a USB key or a memory card, for example.

The WiFi Display standard indicates that, to be recognised (or detected) as being a WiFi Display (Miracast) compatible device, IEs (Information Elements) must be correspondingly inserted into the WiFi MAC frames.

The IEs 100 are described by the WiFi Display standard and are in correlation with the characteristics of the device concerned, that is to say the transmitter device.

Thus, and according to the detailed embodiment of the invention, the receiver-decoder uses the information fields intended for these IEs to indicate, by specifying the information elements embedded in the beacon frames, that it is a source device and indicates the model, the coding capabilities and the available resolutions of the item of audiovisual content, for example. The receiver-decoder 1 previously obtained these items of information by reading them and via its control unit 4.

Also, and if the client receiver-decoder 1 is connected to a plurality of remote mobile devices similar to device 7, it may indicate in the information elements IE transmitted that it is a source of items of audiovisual content to all devices connected at once, so that a remote connected device receiving the IEs, such as a smartphone or a tablet, for example, can offer its user a direct peer-to-peer wireless connection with the receiver-decoder 1 with a view to carrying out a display forwarding, cleverly in "the opposite direction" to that intended according to the prior art for the implementation of display forwarding functions compatible with a display forwarding standard such as Miracast. The user may thus make a choice.

According to the embodiment of the invention, IEs 100 are inserted into management packets of the MAC layer, such as beacon, probe request or probe response packets, for example, making it possible to present the receiver-decoder 1 as being a source device compatible with the WiFi Display standard, even though this is natively intended to be a client device of the distribution network 5.

**Figure 4** is a functional diagram which shows the method for reproducing audiovisual programmes, implemented on the remote device 7, according to a particular embodiment of the invention.

In the embodiment shown in figure 4, the reproduction method comprises:
- an initialisation **K0**, which corresponds to a nominal operating state of the remote device 7 after it has been switched on and placed in nominal operation, such as, for example, in reception of a programme via the wireless interface 370.
- a definition **K1** of an item of information 200 representative of a remote command aiming to configure a reception parameter, of the receiver-decoder device 1, implemented for example notably by user input/output means (such as a keyboard for example);
- a transmission **K2** of the representative item of information 200, via the wireless interface 370.

The invention is not limited to the Miracast display forwarding standard but also applies to any other similar function making it possible to implement a display forwarding from a mobile device to a remote display device compatible with this standard.

## Claims

1. Receiver device (1) for receiving audiovisual programmes comprising a first interface (2) and a second interface (3), said first interface (2) being adapted for the reception of at least one audiovisual programme, said second interface (3) being compatible with a function for display forwarding to a remote device, said device (1) being **characterised in that** it comprises:
- a reception module (31), adapted to a reception of an item of information (200) representative of a remote command, from said remote device, aiming to configure a reception parameter of said receiver device (1);
- a control module (4) adapted to a control of the reception of an audiovisual programme received over said first interface (2) using said item of information representative of a remote command (200).

2. Receiver device (1) according to claim 1 **characterised in that** said second interface connects said receiver device to said remote device by a direct point-to-point link (6), said direct link (6) using the MAC link layer for the transmission of said item of information.

3. Receiver device (1) according to claim 1 or 2 **characterised in that** it further comprises a transmission module, adapted to a transmission of said audiovisual programme to said remote device.

4. Receiver device (1) according to any one of claims 1 to 3 **characterised in that** it further comprises an insertion module (31), adapted to an insertion of information elements (100) into the link layer of said second interface, said information elements (100) being adapted to transmit, at the MAC network link layer, items of information representative of a capability to transmit over said second interface (3) said at least one audiovisual programme received from said first interface (2), prior to an operation for decoding the audio and/or video components of said item of audiovisual content.

5. Receiver device (1) according to any one of claims 1 to 4 **characterised in that** it further comprises a data insertion module (4, 31), adapted to the insertion of said at least one audiovisual programme into frames successively inserted into a data stream transmitted at the MAC link layer of said second interface (3) to said remote device (7) connected to said second interface (3).

6. Receiver device (1) according to any one of claims 1 to 5, **characterised in that** it further comprises a decoding module, adapted to a decoding of audiovisual programmes.

7. Receiver device (1) according to any one of claims 1 to 6, **characterised in that** it further comprises a reproduction device (8), adapted to a reproduction of audiovisual programmes.

8. Receiver device (1) according to any one of claims 1 to 7 **characterised in that** said received audiovisual programmes are available from a plurality of transmission channels of a transmission network (5) and that the selection of a transmission channel is controlled by said received item of information representative of a remote command.

9. Reproduction device (7) for reproducing audiovisual programmes comprising an interface (370) compatible with a function for display forwarding from a remote device, said device (7) being **characterised in that** it comprises:
- a definition module, adapted for a definition of an item of information (200) representative of a remote command aiming to configure a reception parameter of said remote device (1);
- a transmission module, adapted for a transmission of said representative item of information (200) to said remote device (1) from said interface (370).

10. Method for transferring audiovisual programmes, implemented in a receiver client device (1) for receiving audiovisual programmes comprising a first interface (2) and a second interface (3), said first interface (2) being adapted for the reception of at least one audiovisual programme, said second interface (3) being compatible with a function for display forwarding to a remote device, said method being **characterised in that** it comprises:
- a reception (S2) of an item of information (200) representative of a remote command, from said remote device, aiming to configure a reception parameter of said receiver-decoder device (1);
- a configuration of the control of the reception of an audiovisual programme received over said first interface (2) using said item of information representative of a remote command (200).

11. Transfer method according to claim 10 **characterised in that** said received audiovisual programmes are available from a plurality of transmission channels of a transmission network (5) and that said configuration comprises a selection of a transmission channel according to said received item of information.

12. Transfer method according to claim 11 **characterised in that** it comprises a transmission of an audiovisual programme to said remote device, said transmission taking into account said selection.

13. Transfer method according to one of claims 11 or 12 **characterised in that** it comprises a reproduction of an audiovisual programme on said receiver device, said reproduction taking into account said selection.

14. Transfer method according to any one of claims 11 to 13 **characterised in that** it comprises a broadcast of an item of audiovisual content previously received by said receiver device, said broadcast being implemented according to said representative item of information.

15. Method for reproducing an audiovisual programme on a reproduction device (7) for reproducing audiovisual programmes comprising an interface (6) compatible with a function for display forwarding from a remote device (1), said method being **characterised in that** it comprises:
- a definition of an item of information (200) representative of a remote command aiming to configure a reception parameter of said remote device (1);
- a transmission of said representative item of information (200) to said remote device (1) from said interface (6).
